Europäisches Patentamt

European Patent Office

Office européen des brevets

(19)

(11) Publication number: **0 109 481**

**B1**

(12)

# EUROPEAN PATENT SPECIFICATION

(45) Date of publication of patent specification: **13.01.88**

(51) Int. Cl.⁴: **G 11 B 5/64, G 11 B 5/82**

(21) Application number: **83105929.0**

(22) Date of filing: **16.06.83**

(54) Magnetic recording disk.

(30) Priority: **22.11.82 US 443515**

(43) Date of publication of application:
**30.05.84 Bulletin 84/22**

(45) Publication of the grant of the patent:
**13.01.88 Bulletin 88/02**

(84) Designated Contracting States:
**DE FR GB**

(56) References cited:
**EP-A-0 054 640**
**GB-A-2 096 647**

**PATENTS ABSTRACTS OF JAPAN, vol. 7, no.
172 (P-213)1317r, 29th July 1983; & JP - A - 58
77 027 (TOKYO DENKI KAGAKU KOGYO K.K.)
10-05-1983**

**PATENTS ABSTRACTS OF JAPAN, vol. 6, no.
152 (P-134)1030r, 12th August 1982; & JP - A -
57 71 518 (DAINIPPON INSATSU K.K.) 04-05-
1982**

**PATENTS ABSTRACTS OF JAPAN, vol. 7, no.
32 (P-174)1177r, 8th February 1983; & JP - A -
57 183 633 (HITACHI SEISAKUSHO K.K.) 12-11-
1982**

(73) Proprietor: **International Business Machines
Corporation
Old Orchard Road
Armonk, N.Y. 10504 (US)**

(72) Inventor: **Weiss, Joel Richard
17065 Copper Hill Drive
Morgan Hill California 95037 (US)**

(74) Representative: **Atchley, Martin John
Waldegrave
IBM United Kingdom Limited Intellectual
Property Department Hursley Park
Winchester Hampshire SO21 2JN (GB)**

Courier Press, Leamington Spa, England.

## Description

This invention relates in general to magnetic recording disks.

In the field of magnetic recording, the use of disks having either particulate or thin film magnetic coatings on aluminium substrates is well known. Each of these types of coating has problems associated therewith which renders it less than totally desirable, particularly for extremely thin coatings which are required for high bit density recording patterns being used now and in the future.

Particulate magnetic coatings on aluminium substrates, especially in extremely thin layers, often exhibit limited durability with respect to contact with the magnetic transducer associated with the disk. Thin film magnetic coatings, usually produced by sputtering, evaporation or electroplating of a magnetic coating on an aluminium substrate, are generally thinner than those available with particulate coatings. However, thin film coatings often exhibit significant corrosion problems, primarily because of the reaction between the metal substrate, which has been required to be aluminium because of weight considerations, and the deposited thin film coating. Disks having thin film magnetic coatings have required the deposition of two or more protective layers between the substrate and the thin film magnetic coating and over the thin film coating. Understandably, the requirement for these protective layers has added significantly to the cost of the disk. Additionally, both particulate and thin film coatings magnetic disks usually have needed a substrate of substantial thickness relative to the coating thickness, thereby adding appreciably to the weight of an assembly which includes several of such disks.

Since thin film coatings of metals or polymers typically replicate the substrate surface, the necessity to try to achieve surface perfection (i.e. asperity free, flat, etc. to prevent amplitude modulation and head crashes) in aluminium substrates has been a traditional problem. While improvements in substrate polishing and coating have been made, future major performance improvements will rely on enhancements of the substrate surface.

European Patent application 54640 A1 describes the use of silicon for a magnetic recording disk substrate, but that structure requires a reinforcing core member to support the silicon substrate.

The object of the present invention is to provide an improved magnetic recording disk.

According to the present invention a magnetic recording disk comprises a substrate entirely of silicon, the surfaces of which are essentially asperity free, a non-magnetic undercoat layer applied to at least one surface of said silicon substrate, a magnetic layer applied to the free surface of the or each non-magnetic undercoat layer, and a non-magnetic overcoat layer applied to the free surface of the or each magnetic layer.

The undercoat layer is found to enhance the performance and adhesion of the subsequently applied magnetic layer. The overcoat layer provides a hard protective coating for the magnetic layer.

In order that the invention may be more readily understood, the following is a description of one embodiment of the invention.

Silicon wafers suitable for substrates can be produced by cutting conventional silicon boules or cylinders which are readily available in the semiconductor industry. The wafers may be sliced from a boule or cylinder by any suitable technique. Such boules or cylinders are now available in diameters greater than 15.0 cms (six inches). The wafers may be cut to a suitable thickness such as the range from 0.043 to 0.082 cms (0.017 to 0.032 inches) and polished on both surfaces. The surfaces of these silicon wafers have been found to be exceptionally flat and essentially asperity-free. Prior to application of any coating to one of these silicon wafers, a central opening is preferably provided in the wafer to permit a magnetic recording disk incorporating the wafer as a substrate to be clamped to a suitable structure for rotating. Such an opening may be generated by laser cutting or diamond core drilling for example.

After the initial fabrication of the silicon wafer in a form suitable to be a substrate, a non-magnetic undercoat layer is applied to both surfaces of the wafer. This undercoat layer is preferably Cr which is applied by RF sputtering to a thickness of approximately $4.5 \times 10^{-7}$ m (4500 Å). It has been found that the application of this undercoat layer to the surface of the silicon wafer results in an enhancement of the magnetic properties of an overlying magnetic layer and that this magnetic enhancement does not occur when Cr is similarly deposited as an undercoat layer on substrates other than silicon, such as AlMg.

Following application of the undercoat layer, a magnetic layer is applied, again by RF sputtering. The magnetic layer can be of a suitable type such as the Fe, Co, Cr magnetic layer described in European Patent Application 10626A. As described in that Patent Application, the magnetic layer consists essentially of, in weight percentage, from 0—55% Co and from 8—22% Cr, with the remainder being mainly iron. Such a magnetic layer can be deposited to a thickness of approximately $30 \times 10^{-9}$ m (300 Å) by RF sputtering.

It has been found that magnetic layers produced as described above have excellent and unexpectedly good magnetic properties including coercivities ranging from 300 to 1000 oersteds, and magnetic squareness values approximately greater than 90%. Alternatively, magnetic layers of sputtered Co, Cr can be made and have produced excellent magnetic properties.

As an alternative to the Fe, Co, Cr magnetic layer described in European Patent Application 10626A, other magnetic layers may be employed. For example, a layer of $Fe_3O_4$ may be RF sputtered and converted in place by oxidation to magnetic $Fe_2O_3$.

Finally, a suitable overcoat layer is provided to protect the magnetic layer, and such overcoat layer is a hard, durable ceramic, polymeric or metallic film sufficiently thin so as not to degrade the magnetic characteristics of the magnetic layer. One particularly attractive protective overcoat layer is formed by monolayers of $7 \times 10^{-9}$ m (70 Å) diameter $SiO_2$ beads plus $5 \times 10^{-9}$—$10 \times 10^{-9}$ m (50 Å—100 Å) of amorphous $SiO_2$ applied by a precipitation/dip process.

If desired, a lubricant material may be applied to the surface of the protective overcoat layer to facilitate the "flying" of a transducer in close air bearing relationship to the rotating disk surface without deleterious contact between the transducer and the disk surface.

## Claims

1. A magnetic recording disk comprising a support, a magnetic layer applied to at least one surface of said support and a non-magnetic overcoat layer applied to the free surface of the or each magnetic layer, characterised in that said support comprises a substrate entirely of silicon, the surfaces of which are substantially asperity free, and a non-magnetic undercoat layer for the or each magnetic layer applied to at least one surface of said silicon substrate.

2. A magnetic recording disk as claimed in claim 1 characterised in that said silicon substrate consists essentially of single crystal silicon.

3. A magnetic recording disk as claimed in claim 1 or claim 2 characterised in that said undercoat layer is of Cr.

4. A magnetic recording disk as claimed in any one of the preceding claims characterised in that said overcoat layer is of $SiO_2$.

5. A magnetic recording disk as claimed in any one of the preceding claims characterised in that said magnetic layer is of Fe, Co, Cr.

## Patentansprüche

1. Magnetische Aufzeichnungsplatte mit einem Träger, einer auf wenigstens einer Oberfläche des Trägers aufgebrachten magnetischen Schicht und einer auf der freien Oberfläche der oder jeder magnetischen Schicht aufgebrachten nicht-magnetischen Überzugsschicht, dadurch gekennzeichnet, daß der Träger ein gänzlich aus Silizium bestehendes Substrat, dessen Oberflächen im wesentlichen unebenheitsfrei sind, und eine auf wenigstens einer Oberfläche des Siliziumsubstrats aufgebrachte nicht-magnetische Unterzugsschicht für die oder jede magnetische Schicht umfaßt.

2. Magnetische Aufzeichnungsplatte nach Anspruch 1, dadurch gekennzeichnet, daß das Siliziumsubstrat im wesentlichen aus Siliziumeinkristall besteht.

3. Magnetische Aufzeichnungsplatte nach Anspruch 1 oder 2, dadurch gekennzeichnet, daß die Unterzugsschicht aus Cr besteht.

4. Magnetische Aufzeichnungsplatte nach irgendeinem der vorstehenden Ansprüche, dadurch gekennzeichnet, daß die Überzugsschicht aus $SiO_2$ besteht.

5. Magnetische Aufzeichnungsplatte nach irgendeinem der vorstehenden Ansprüche, dadurch gekennzeichnet, daß die magnetische Schicht aus Fe, Co, Cr besteht.

## Revendications

1. Disque magnétique d'enregistrement, comprenant un support, une couche magnétique appliquée sur une face au moins du support et une couche supérieure non magnétique appliquée à la surface libre de la couche magnétique ou de chaque couche magnétique, caractérisé en ce que le support comporte: un substrat entièrement formé de silicium et dont les surfaces sont pratiquement dépourvues d'aspérités, et, pour la couche magnétique ou chaque couche magnétique, une sous-couche non magnétique, celle-ci étant appliquée sur une face au moins du substrat de silicium.

2. Disque magnétique d'enregistrement selon la revendication 1, caractérisé en ce que le substrat de silicium est essentiellement constitué de silicium monocristallin.

3. Disque magnétique d'enregistrement selon l'une des revendications 1 et 2, caractérisé en ce que la sous-couche est formée de Cr.

4. Disque magnétique d'enregistrement selon l'une quelconque des revendications précédentes, caractérisé en ce que la couche supérieure est formée de $SiO_2$.

5. Disque magnétique d'enregistrement selon l'une quelconque des revendications précédentes, caractérisé en ce que la couche magnétique est formée de Fe, Co, Cr.